## Europäisches Patentamt

## European Patent Office

## Office européen des brevets

(11) Veröffentlichungsnummer: **0 294 656**
**A2**

# EUROPÄISCHE PATENTANMELDUNG

(21) Anmeldenummer: **88108401.6**

(51) Int. Cl.⁴: **B09B 1/00**

(22) Anmeldetag: **26.05.88**

(30) Priorität: **09.06.87 DE 3719208**

(43) Veröffentlichungstag der Anmeldung:
**14.12.88 Patentblatt 88/50**

(84) Benannte Vertragsstaaten:
**AT BE CH DE ES FR GB GR IT LI LU NL SE**

(71) Anmelder: **Akzo N.V.**
**Postbus 9300 Velperweg 76**
**NL-6800 SB Arnhem(NL)**

(72) Erfinder: **Wunderatzke, Wilfried**
**Drosselweg 9a**
**D-5000 Köln 50(DE)**

(74) Vertreter: **Fett, Günter**
**Akzo Patente GmbH Kasinostrasse 19 - 23**
**D-5600 Wuppertal 1(DE)**

(54) **Dom für Deponien.**

(57) Dom für Deponien mit zumindest außenliegender Filterschicht und innerhalb der außenliegenden Filterschicht angeordnetem Dränage- und/oder Entgasungsbereich, dadurch gekennzeichnet, daß der Dränage- und/oder Entgasungsbereich von mindestens einem Formkörper aus Kunststoff gebildet ist, welcher ein Hohlraumvolumen von mindestens 70% aufweist, und daß im Formkörper ein durchgehendes, der Höhe des Domes entsprechend langes Stützrohr (2) angeordnet ist. Diese Formkörper können aus dreidimensional geformten Kunststoffplatten zusammengesetzt sein oder aus einer Vielzahl von in Schlaufen liegenden, sich überkreuzenden Fäden aus schmelzgesponnenen Polymeren mit einem Fadendurchmesser von mindestens 0,1 mm bestehen, welche an ihren Kreuzungsstellen miteinander verklebt sind. In bevorzugter Ausführungsform ist das Stüztrohr(2) mit einer Fußplatte (4) gekoppelt. Der Formkörper besteht bevorzugt aus einer aufgewickelten Matte (5), an welcher die Filterschicht (6) kaschiert ist.

Fig. 3

## Dom für Deponien

Die Erfindung betrifft Dome für Deponien mit zumindest außenliegender Filterschicht und innerhalb der außenliegenden Filterschicht angeordnetem Dränage- und/oder Entgasungsbereich.

Derartige Dome, die in vertikaler oder nahezu vertikaler Anordnung in einer Deponie gleichmäßig verteilt angeordnet sind, sind vielfach bekannt.

Beispielsweise ist eine sehr aufwendige Konstruktion eines Domes aus der DE-OS 36 09 973 bekannt geworden. Zur Herstellung dieses Domes bzw. Sickerwasser-Sammelschachtes ist es erforderlich, zunächst einen Schacht zu erstellen, in dessen Außenwand Durchlässe eingebaut sind. Um diesen Schacht wird eine Filterschicht gruppiert. Da der Schacht in seiner vollen Höhe erstellt werden muß, können solche Schächte nur in sehr großen Abständen voneinander aufgestellt werden, um die Ablagerung des Deponiegutes nicht zu behindern. Hinweise auf die Zusammensetzung und die Art der Befestigung der Filterschicht am Schacht sind der DE-OS 36 09 973 nicht entnehmbar. Die Entwässerung erfolgt bei dem bekannten Dom über den freien Innenquerschnitt des Schachtes, wodurch infolge der hohen seitlichen Druckbelastung des Deponiegutes eine große Wandstärke des Schachtes erforderlich wird. Insofern wird eine große Querschnittsfläche für den bekannten Dom benötigt. Diese Querschnittsfläche ist für die Ablagerung für Deponiegut verloren.

Ein weiterer Dom ist aus der DE-OS 33 06 665 bekannt geworden. Zum Aufbau des bekannten Domes wird zunächst ein Mantelrohr auf den Deponieboden gestellt und mit Filterkies gefüllt. Nachdem die Deponie bis in etwa der Höhe des Mantelrohres mit Deponiegut befüllt worden ist, wird das Mantelrohr um etwa eine Länge nach oben gezogen und neu mit Filterkies befüllt. Bei diesem bekannten Dom muß also in zeitlichen Abständen jeweils das Mantelrohr um eine Länge nach oben gezogen werden und neu mit Kies verfüllt werden. Die Herstellung dieser Dome ist also sehr zeitaufwendig und nur durch Einsatz von Maschinen, wie beispielsweise Kranwagen durchführbar. Wegen des sehr geringen Hohlraumvolumens der aufgeschütteten Filterkiessäule ist zur Gewährleistung einer ausreichenden Entwässerung und/oder Entgasung wiederum eine große Querschnittsfläche des Domes erforderlich. Bei Ablagerung von unterschiedlich verrottbarem Deponiegut, welches sich dann unterschiedlich setzt, werden im Verrottungszeitraum im Deponiegut Querkräfte bewirkt, die eine Verschiebung des aus lose aufgeschüttetem Filterkies bestehenden Domes bewirken. Durch die Verlagerung von Filterkiesschichten kann entweder eine sichere Dränage und/oder Entlüftung nicht mehr erfolgen oder die Querschnittsfläche des Filterkieses muß so groß gewählt werden, daß auch bei Verlagerung von Filterkiesschichten eine Dränage und/oder Entgasung gewährleistet bleibt. Auch hier wird wertvoller Platz für das Deponiegut verbraucht.

Es ist deshalb Aufgabe der vorliegenden Erfindung, Dome für Deponien der eingangs genannten Art zur Verfügung zu stellen, die einfach und ohne großen Aufwand herstellbar sind und außerdem zum Erfüllen ihrer Entwässerungs- und/oder Entgasungsfunktion eine möglichst geringe Querschnittsfläche benötigen.

Diese Aufgabe wird erfindungsgemäß dadurch gelöst, daß der Dränage und/oder Entgasungsbereich von mindestens einem Formkörper aus Kunststoff gebildet ist, welcher ein Hohlraumvolumen von mindestens 70% aufweist, und daß im Formkörper ein durchgehendes, der Höhe des Domes entsprechend langes Stützrohr angeordnet ist.

Derartige Formkörper sind als Dränageformkörper bereits seit langem bekannt. Sie bestehen beispielsweise aus dreidimensional geformten Kunststoffplatten oder aus einer Vielzahl von in Schlaufen liegenden, sich überkreuzenden Fäden aus schmelzgesponnenen Polymeren mit einem Fadendurchmesser von mindestens 0,1 mm, welche an ihren Kreuzungsstellen miteinander verbunden sind. Letztere Formkörper können beispielsweise nach dem in der DE-OS 18 10 921 beschriebenen Verfahren hergestellt sein, indem die dort aus der Spinndüse austretenden Fäden beim Auftreffen auf die Wasseroberfläche durch einen außenliegenden Zylinder geführt werden. Hierdurch ergibt sich eine zylindrische Form des Formkörpers. Durch konische Verringerung der freien Querschnittsfläche des außenliegenden Zylinders im Bereich der Wasserbadoberfläche kann erreicht werden, daß die Fäden im Bereich der Randzone des Formkörpers dichter zu liegen kommen, so daß durch diese Verdichtung eine Filterschicht erzeugt wird. Weiterhin kann in dem außenliegenden Zylinder zentral ein weiterer Zylinder angeordnet sein, der einen inneren Hohlraum im Formkörper bewirkt. Hierbei entsteht ein hohlzylindrischer Formkörper, welcher zur Herstellung eines Domes in einfacher Weise über das Stützrohr gestülpt werden kann. Da ein nach diesem Verfahren hergestellter Formkörper ein sehr großes Hohlraumvolumen besitzt, ist bei der Verwendung eines solchen Formkörpers zur Herstellung von Domen ein wesentlich geringerer Querschnitt erforderlich. Es hat sich außerdem herausgestellt, daß lediglich durch Wahl der Herstellungsbedingungen und Wahl der Fadendurchmesser der den Formkörper bildenden Fäden eine ausreichende Druckbeständigkeit des Formkörpers erreicht werden kann.

Obwohl derartige Formkörper seit langem bekannt sind, wurden diese bisher nicht zur Herstellung von Deponiedomen eingesetzt, weil davon ausgegangen wurde, daß diese Formkörper zu instabil sind und deshalb für diesen Einsatz nicht geeignet sind.

Durch die im Prinzip sehr einfach zu bewerkstelligende Kombination derartiger Formkörper mit in diesem Formkörper eingebrachtem Stützrohr wird die Stabilität der Dome und somit ein durchgehender Dränage- und/oder Entgasungsbereich gewährleistet. Durch den hohen Hohlraumanteil der Formkörper kann dieser ohne weiteres vom Deponiegut zusammengepreßt werden. Trotz dieser Volumenverringerung ist noch ein genügender Hohlraum für Dränage- und/oder Entgasungszwecke vorhanden.

Unter Stützrohr sollen im Rahmen der vorliegenden Erfindung derartige Stützrohre verstanden werden, die trotz der bei der Ansammlung von Deponiegut entstehenden Querkräfte, die auf den Dom wirken, gewährleisten, daß die Formkörper zu einer das Deponiegut in vertikaler Richtung durchlaufende Anordnung gehalten werden. Die Stützrohre können aus Vollmaterial oder aus Hohlmaterial hergestellt sein und müssen ein seitliches Verschieben einzelner Formkörperabschnitte wirksam verhindern. Außerdem müssen die Stützrohre den vom Deponiegut über die Formkörper aufgebrachten Druckkräften standhalten.

Durch diese Kombination von Stützrohr und Formkörper wird es möglich, die Erstellung von Deponiedomen vor Ort wesentlich zu vereinfachen und jeweils dem Füllzustand der Deponie anzupassen, ohne daß Behinderungen beim Befüllen der Deponie auftreten.

Es hat sich als Vorteil herausgestellt, wenn das Stützrohr aus mehreren miteinander gekoppelten Rohren besteht. Auf diese Weise kann das Stützrohr in Abhängigkeit der bereits aufgefüllten Deponieguthöhe auf einfache Weise verlängert werden. Die Koppelung der Stützrohre kann beispielsweise durch Muffen, Verschraubungen o.ä. erfolgen.

Um einen sicheren Stand des Stützrohres zu erreichen, ist das Stützrohr mit einer Fußplatte gekoppelt.

Auch hat es sich als zweckmäßig erwiesen, wenn die Filterschicht ein aus Polymerfäden gebildetes Vlies ist. Ein solches Vlies kann in seinen Festigkeitseigenschaften auf den jeweiligen Einsatzzweck eingestellt werden. Durch den Einsatz von Polymerfäden kann den Anforderungen an die Verrottungsfestigkeit Rechnung getragen werden.

In einer weiteren Ausbildung des erfindungsgemäßen Domes besteht der Formkörper aus mehreren ineinandergeschachtelten, rohrförmigen Zylindern. Überraschenderweise wurde festgestellt, daß durch das Ineinanderschachteln mehrerer hohlzylindrischer Formkörper die Druckbeständigkeit des Gesamtformkörpers erhöht werden kann. Außerdem besteht durch das Ineinanderschachteln mehrerer hohlzylindrischer Formkörper die Möglichkeit zwischen benachbarten Zylindern eine weitere Filterschicht anzuordnen, so daß eine Filterung auch bei Verletzung der äußeren Filterschicht noch gewährleistet ist. Als Querschnittsformen für die hohlzylindrischen Formkörper kommen kreisförmige, elliptische, rechteckige, quadratische, o.ä. infrage.

In einer besonders bevorzugten Ausführungsform besteht der Formkörper aus einer aufgewickelten Matte, wobei dann die Matte aus einer Vielzahl von in Schlaufen liegenden, sich überkreuzenden Fäden aus schmelzgesponnenen Polymeren mit einem Fadendurchmesser von mindestens 0,1 mm besteht, welche an ihren Kreuzungsstellen miteinander verklebt sind. Derartige Matten sind beispielsweise aus der DE-OS 18 10 921 oder als besonders druckfeste Matten aus der DE-OS 25 30 499 bzw. der DE-OS 27 20 403 bekannt und sind in bereits aufgewickeltem Zustand im Handel erhältlich. Derartige aufgewickelte Matten, die die äußere Form einer Rolle aufweisen, brauchen lediglich über das Stützrohr gestülpt zu werden, um den Dom zu bilden. Es ist überraschend, daß durch die Verwendung der bekannten Mattenrollen auf sehr einfache Weise Dome hergestellt werden können, indem lediglich die Mattenrollen mit einem Stützrohr ausgestattet werden.

Hierbei hat es sich als zweckmäßig erwiesen, wenn die Matte zumindest einseitig mit einem Filtervlies kaschiert ist. Auf diese Weise ist auch bei Verletzung mehrerer außenliegenden Filterschichten durch beispielsweise scharfkantiges Deponiegut die Entwässerung und/oder die Entgasung dennoch gewährleistet.

Zur Erhöhung der Druckbeständigkeit der erfindungsgemäß zur Herstellung von Domen benutzten Formkörper können im Formkörper druckbeständige Körner enthalten sein. Als druckbeständige Körner können beispielsweise Blähton, Kies, o.ä. Verwendung finden. Die druckbeständigen Körner dienen hier lediglich als Abstandshalter, wozu nur ein geringer Anteil an Körnern notwendig ist. Die Körner können in einfacher Weise in einer Matte gemäß DE-OS 25 30 499 eingelagert werden, weil die dort beschriebene Matte eine Höckerstruktur aufweist, in deren Zwischenräume die Körner eingerakelt werden können. Es ist hierbei nicht erforderlich, in jeden Hohlraum Körner einzulagern.

Um möglichst viel Platz für das Deponiegut zu schaffen, ist es vorteilhaft, wenn der Dom eine von unten nach oben abnehmende Querschnittsfläche aufweist. Bei der Verwendung von aufgewickelten Mattenrollen kann dies in einfacher Weise dadurch bewerkstelligt werden, daß die Mattenrollen in oberen Bereichen weniger Wicklungen aufweisen als in den unteren Bereichen.

Unter den Begriff "Deponie" soll im Rahmen dieser Erfindung auch der Begriff "Spülfeld" (künstlich errichtetes, freiliegendes Becken mit Entwässerungsdomen) und Ansammlungen von Schlick o.dgl. zur Verlandung von Küstengebieten verstanden werden.

Die Erfindung wird anhand der nachfolgenden Figuren näher erläutert.

Es zeigen:

Figur 1 einen Längsschnitt durch einen erfindungsgemäßen Dom

Figur 2 die Draufsicht des Domes gemäß Figur 1

Figur 3 eine perspektivische Ansicht eines weiteren erfindungsgemäßen Domes.

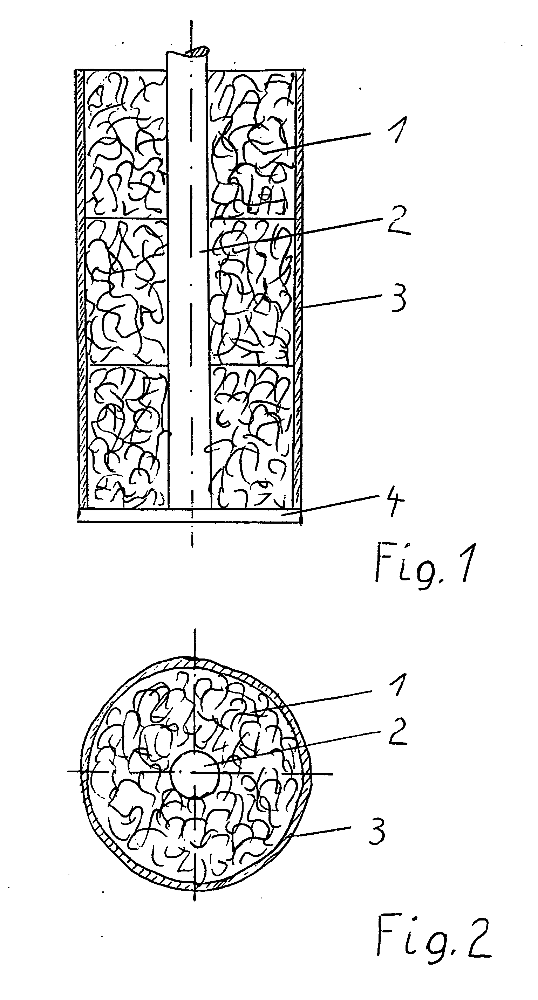

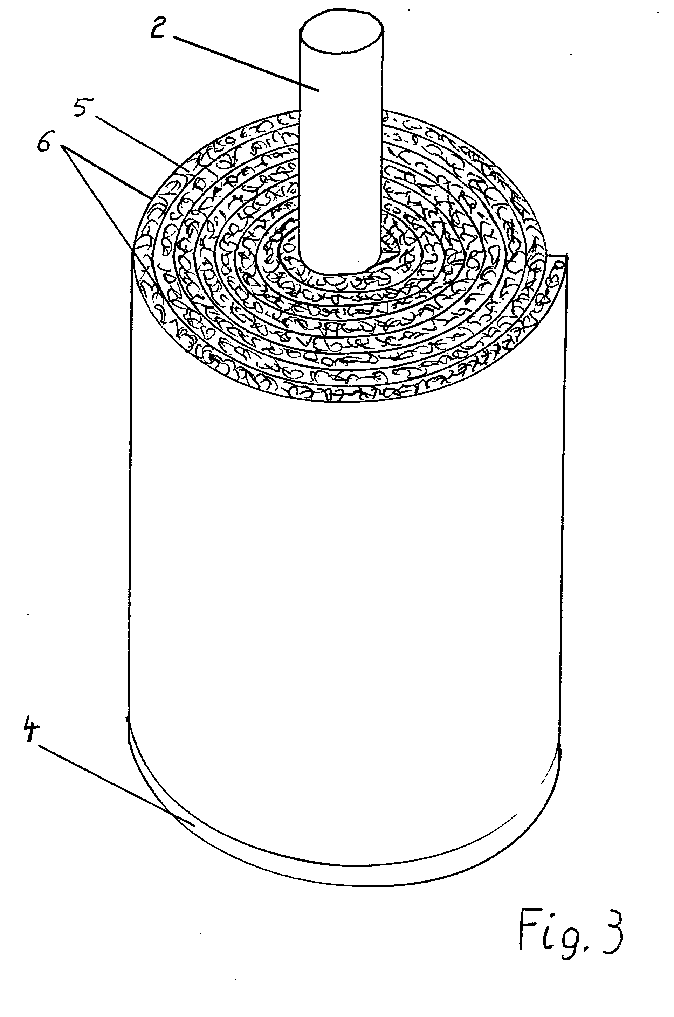

In Figur 1 und 2 ist der Dränage- und/oder Entgasungsbereich mit 1 bezeichnet. Er besteht aus einem Formkörper, der aus einer Vielzahl von in Schlaufen liegenden, sich überkreuzenden Fäden aus schmelzgesponnenen Polymeren mit einem Fadendurchmesser von mindestens 0,1 mm besteht, welche an ihren Kreuzungsstellen miteinander verklebt sind. Mehrere Formkörper 1 - drei davon sind in Figur 1 dargestellt -werden hintereinander auf ein Stützrohr 2 aufgeschoben. Nach außen hin werden die Formkörper durch eine Filterschicht, beispielsweise ein Vlies, abgedeckt. Zum besseren Stehvermögen ist das Stützrohr 2 mit einer Fußplatte 4 gekoppelt. In Figur 3 enthält der dort dargestellte Dom wiederum ein Stützrohr 2 und eine an dieses Stützrohr angekoppelte Fußplatte 4. Der Dränage- und/oder Entgasungsbereich besteht im dargestellten Falle aus einer um das Stützrohr gewickelten Matte 5, welche einseitig mit einem Vlies 6 kaschiert ist. Die Matte 5 besteht wiederum aus einer Vielzahl von in Schlaufen liegenden sich überkreuzenden Fäden aus - schmelzgesponnenen Polymeren, welche an ihren Kreuzungsstellen miteinander verklebt sind. Derartige Matten können im Handel in der dargestellten Rollenform bezogen werden und können ohne weitere Vorkehrungen über das Stützrohr geschoben werden. Durch Koppelung, beispielsweise durch eine Schraubmuffe kann das Stützrohr 2 verlängert werden und weitere Mattenrollen 5/6 aufgeschoben werden. Dieser Vorgang kann so oft wiederholt werden, bis der Dom in den Kopf der Deponie reicht.

Es versteht sich von selbst, daß in einer Deponie eine große Anzahl solcher Dome plaziert ist, wobei die Entfernung zwischen benachbarten Domen so zu wählen ist, daß das Deponiegut sicher entwässert bzw. entgast werden kann. Zur Entwässerung bzw. zur Entgasung sind die Dome im Kopfbereich sowie im Bodenbereich der Deponie untereinander mit Querrohren verbunden.

## Ansprüche

1. Dom für Deponien mit zumindest außenliegender Filterschicht und innerhalb der außenliegenden Filterschicht angeordneten Dränage- und/oder Entgasungsbereich, dadurch gekennzeichnet, daß der Dränage- und/oder Entgasungsbereich von mindestens einem Formkörper aus Kunststoff gebildet ist, welcher ein Hohlraumvolumen von mindestens 70% aufweist, und daß im Formkörper ein durchgehendes, der Höhe des Domes entsprechend langes Stützrohr (2) angeordnet ist.

2 Dom nach Anspruch 1, dadurch gekennzeichnet, daß der Formkörper aus dreidimensional geformten Kunststoffplatten zusammengesetzt ist.

3. Dom nach Anspruch 1 oder 2, dadurch gekennzeichnet, daß der Formkörper aus einer Vielzahl von in Schlaufen liegenden, sich überkreuzenden Fäden aus schmelzgesponnenen Polymeren mit einem Fadendurchmesser von mindestens 0,1 mm bestehen, welche an ihren Kreuzungsstellen miteinander verbunden sind.

4. Dom nach einem oder mehreren der Ansprüche 1 bis 3, dadurch gekennzeichnet, daß das Stützrohr aus mehreren, miteinander gekoppelten Rohren besteht.

5. Dom nach einem oder mehreren der Ansprüche 1 bis 4, dadurch gekennzeichnet, daß das Stützrohr mit einer Fußplatte gekoppelt ist.

6. Dom nach einem oder mehreren der Ansprüche 1 bis 5, dadurch gekennzeichnet, daß die Filterschicht ein aus Polymer-Fäden oder -Fasern gebildetes Vlies ist.

7. Dom nach einem oder mehreren der Ansprüche 1 bis 6, dadurch gekennzeichnet, daß der Formkörper aus mehreren ineinandergeschachtelten, rohrförmigen Zylindern besteht.

8. Dom nach Anspruch 7, dadurch gekennzeichnet, daß zumindest zwischen außenliegenden Zylindern eine weitere Filterschicht angeordnet ist.

9. Dom nach einem oder mehreren der Ansprüche 1 bis 6, dadurch gekennzeichnet, daß der Formkörper aus einer aufgewickelten Matte besteht.

10. Dom nach Anspruch 9, dadurch gekennzeichnet, daß die Matte zumindest einseitig mit einem Filtervlies kaschiert ist.

11. Dom nach einem oder mehreren der Ansprüche 1 bis 10, dadurch gekennzeichnet, daß der Formkörper druckbeständige Körner enthält.

12. Dom nach einem oder mehreren der Ansprüche 1 bis 11, dadurch gekennzeichnet, daß der Dom eine von unten nach oben abnehmende Querschnittsfläche aufweist.

Fig. 1

Fig. 2

Fig.3